# EUROPÄISCHE PATENTSCHRIFT

(11) **EP 2 621 763 B1**
(45) Veröffentlichungstag und Bekanntmachung des Hinweises auf die Patenterteilung: **13.02.2019**
(21) Anmeldenummer: 11776084.3
(22) Anmeldetag: 29.09.2011
(51) Int. Cl.: B60R 21/217

(54) **GASSACKMODUL FÜR EIN KRAFTFAHRZEUG**
AIRBAG MODULE FOR A MOTOR VEHICLE
MODULE DE COUSSIN GONFLABLE POUR UN VÉHICULE AUTOMOBILE

(30) Priorität: 01.10.2010 DE 102010047090
(43) Veröffentlichungstag der Anmeldung: 07.08.2013
(73) Patentinhaber: Autoliv Development AB, 447 83 Vårgårda (SE)
(72) Erfinder: BROUSSARD, Marco, 85221 Dachau (DE); WALLAT, Nico, 81827 München (DE); REITER, Thomas, 85256 Vierkirchen (DE)
(74) Vertreter: Schön, Thilo
(86) Internationale Anmeldenummer: PCT/EP2011/004869
(87) Internationale Veröffentlichungsnummer: WO 2012/041500

(56) Entgegenhaltungen:
- EP-A1- 1 514 745
- EP-A2- 0 875 425
- DE-A1- 19 905 025
- DE-U1- 29 917 942
- DE-U1-202005 011 045
- US-A- 5 613 704
- US-A- 5 669 627
- US-A- 5 676 393
- US-B1- 6 189 916

## Beschreibung

### Technisches Gebiet der Erfindung

Die Erfindung betrifft ein Gassackmodul für ein Kraftfahrzeug nach dem Oberbegriff des Anspruchs 1.

Bei vielen Gassackmodulen für Kraftfahrzeuge ist der Gassack in einem Gehäuse aufgenommen, welches einen Aufnahmeraum für den Gassack ganz oder teilweise umschließt. Hierbei ist häufig ein Teil des Gehäuses vom Fahrgastraum aus sichtbar, nämlich der Teil des Gehäuses, der die Tür beinhaltet, welche die Austrittsöffnung, durch welche der Gassack bei Betätigung des zugeordneten Inflators (zumeist ein Gasgenerator; im folgenden wird deshalb auch von Gasgeneratoren gesprochen) ins Innere des Fahrgastraumes austritt, abdeckt. Diese Gassackmodule sind in der Regel Frontgassackmodule, also Fahrergassackmodule, Beifahrergassackmodule und Kniegassackmodule. Die vorliegende Erfindung bezieht sich in erster Linie auf solche Frontgassackmodule, insbesondere Kniegassackmodule.

Auch Seitengassackmodule können Gehäuse aufweisen, welche den Gassack im Wesentlichen vollständig umschließen, diese Gehäuse sind jedoch in der Regel vollständig innerhalb der Seitenwand einer Sitzlehne angeordnet und können vom Fahrgastraum aus nicht gesehen werden.

Bisherige Frontgassackmodule, wie sie oben erwähnt wurden, sind wie folgt aufgebaut: Sie haben ein Gehäuse, welches einen Aufnahmeraum für den Gassack umschließt, wobei in diesem Aufnahmeraum der Gassack und zumindest ein Teil des Gasgenerators aufgenommen ist. Das Gehäuse selbst ist hierbei zweiteilig aufgebaut, wobei das Bauteil, welches die Tür aufweist, zumeist als "Cover" und das andere Bauteil als "Container" bezeichnet wird. Hierbei besteht das Cover fast immer aus Kunststoff, während der Container häufig ganz oder teilweise aus Metall gefertigt ist. Die beiden Gehäusebauteile - also das Cover und der Container - werden hierbei völlig getrennt gefertigt und die Montage zum fertigen Gassackmodul geschieht dadurch, dass der zu einem Paket gerollte und/oder gefaltete Gassack - in der Regel gemeinsam mit dem Gasgenerator - in eines der beiden Gehäusebauteile eingesetzt wird und anschließend die beiden Gehäusebauteile zusammengefügt, beispielsweise miteinander verrastet, werden.

### Stand der Technik

Aus der DE 10 2009 005 993 A1 ist es bekannt geworden, die beiden Gehäusebauteile derart einstückig auszubilden, dass sie über ein Filmscharnier miteinander verbunden sind. Dies hilft insbesondere bei der Handhabung, da somit die beiden zueinander gehörenden Gehäuseteile auch im nicht montiertem Zustand miteinander verbunden sind und nicht verloren gehen können, die Struktur des Gehäuses bleibt jedoch erhalten: es gibt nämlich ein Bauteil, welches dem traditionellen Cover entspricht und ein Bauteil, welches dem traditionellen Container entspricht. Aus diesem Grunde ist ein in diesem Sinne einstückiges Gehäuse auch relativ kompliziert zu fertigen, da man recht aufwendige Spritzgusswerkzeuge benötigt.

Die DE 197 18 211 A1 zeigt ein Gassackmodul mit einem einteiligen, durch Extrusion hergestellten Gehäuse - dort als Behälter bezeichnet. Dieser weist zwei biegsame Abschnitte auf, welche zunächst nicht miteinander verbunden sind, so dass der Gassack und der Gasgenerator ins Innere dieses Behälters gebracht werden können. Nach diesem Montageschritt werden die beiden Abschnitte unter Deformation miteinander verbunden und somit der Behälter geschlossen. Das Gassackmodul weist weiterhin ein separates Abdeckteil auf, welches den Behälter zum Fahrgastraum hin abdeckt und eine mit einer Tür verschlossene Austrittsöffnung aufweist. Insofern ergibt sich keine Reduktion der Bauteile, auch wenn es kein klassisches Cover und keinen klassischen Container gibt.

Die gattungsbildende DE 299 17 942 U1 zeigt ein Gassackmodul mit einem einstückig ausgebildeten Gehäuse, welches zwei über ein Filmscharnier miteinander verbundene Abschnitte aufweist, wobei einer dieser Abschnitte im Wesentlichen einem traditionellen Cover und der andere Abschnitt im Wesentlichen einem traditionellen Container entspricht. Die Montage von Inflator und Gassackpacket erfolgt im aufgeklappten Zustand des Gehäuses. Das Gehäuse ist mittels durch das Gehäuse hindurchtretender Bolzen des Inflators mit dem Fahrzeug verbunden. Eine andere Verbindung zwischen Gassackmodul und Fahrzeug ist nicht vorgesehen.

### Gegenstand der Erfindung

Hiervon ausgehend stellt sich die vorliegende Erfindung die Aufgabe, ein gattungsgemäßes Gassackmodul dahingehend weiterzubilden, dass es insgesamt sehr kostengünstig hergestellt werden kann.

Diese Aufgabe wird durch ein Gassackmodul mit den Merkmalen des Anspruchs 1 gelöst.

Das Gassackmodul ist nicht nur einstückig, sondern auch einteilig ausgebildet. Das heißt, es gibt nicht mehr ein Bauteil, das einem "Cover" und ein Bauteil, das einem "Container" entspricht, wobei Cover und Container nach Zusammenfügen das Gehäuse bilden, sondern es gibt nur noch ein einziges Bauteil, welches hier als Gehäuse bezeichnet wird. Es gibt hier also keine Trennung zwischen einem "Cover" und einem "Container", sondern das Kunstoffgehäuse ist derart einstückig und einteilig ausgebildet, dass es einen unmittelbar an den Fahrgastraum grenzenden Überdeckungsabschnitt mit einer Tür und einen weiteren Abschnitt derart aufweist, dass im montiertem Zustand Überdeckungsabschnitt und weiterer Abschnitt einen Aufnahmeraum umgeben, wobei Überdeckungsabschnitt und weiterer Abschnitt unmittelbar ineinander übergehen.

Dadurch, dass keine zwei separaten Bauteile vorgesehen sind, muss die Montage auch anders als bei bisherigen Gassackmodulen erfolgen. Es ist klar, dass der Gassack und der Gasgenerator, in den Aufnahmeraum eingebracht werden müssen. Es ist deshalb eine Montageöffnung vorgesehen, welche nach Abschluss der Montage verschlossen wird. Dieses Verschließen der Montageöffnung geschieht vorzugsweise dadurch, dass zwei Abschnitte des Gehäuses unmittelbar miteinander verbunden werden, so dass der Aufnahmeraum ausschließlich vom einteiligen Gehäuse umschlossen wird und kein weiteres Gehäusebauteil vorgesehen ist.

Der Inflator (meistens in Form eines Gasgenerators) ist vollständig innerhalb des Aufnahmeraums angeordnet und trägt weiter vorzugsweise den Gassack.

Der Inflator ist nicht starr mit dem Gehäuse verbunden, sondern schwimmend innerhalb des Gehäuses gehalten, so dass seine Position bezüglich des Gehäuses nicht exakt festgelegt ist. Wird das Gassackmodul in einem Fahrzeug montiert, so dienen insbesondere Befestigungsbolzen dazu, den Gasgenerator unmittelbar mit einem Fahrzeugbauteil wie einem Träger zu verbinden. Das bedeutet, dass die Kräfte, die bei Zündung des Gasgenerators und Expansion des Gassack auftreten, insbesondere auch der Fangschlag, unmittelbar ins Fahrzeug abgeleitet werden, so dass das Gehäuse diese Kräfte nicht aushalten muss. Die positionsgenaue Befestigung des Gehäuses mit einem anderen Fahrzeugbauteil, insbesondere einem Teil des Armaturenbrettes, erfolgt direkt über das Gehäuse. Diese Befestigung des Gehäuses ist von der Befestigung des Gasgenerators vollständig unabhängig und muss keine großen Kräfte übertragen können. Diese vollständige Trennung der beiden Befestigungen ist wichtig, um trotz geringen Fertigungsaufwandes eine genaue Positionierung des vom Fahrgastraum sichtbaren Überdeckungsabschnitts erreichen zu können. Somit kann das Gassackmodul leicht am Kraftfahrzeug montiert werden, ohne dass optische Einbußen hingenommen werden müssen und ohne dass sehr enge Toleranzen eingehalten werden müssen.

Das erfindungsgemäße Gassackmodul hat gegenüber der DE 10 2009 005 993 A1 die folgenden Vorteile: Zum einen kann das Spritzgusswerkzeug, in welchem das Gehäuse gefertigt wird, verhältnismäßig klein und einfach ausgebildet sein, was die Werkzeugkosten und auch die Kosten des Spritzgießens selbst erheblich reduzieren kann. Weiterhin ist das Gehäuse sehr einfach zu lagern und zu handhaben. Die Montage des Gassackes und des Gasgenerators im Gehäuse ist nicht aufwendiger als im Stand der Technik. Ähnliche Vorteile ergeben sich auch gegenüber der DE 299 17 942 U1.

Gegenüber der gattungsbildenen DE 197 18 211 ergibt sich der Vorteil der Bauteilreduktion.

Wie bereits erwähnt, ist die bevorzugte Anwendung eines erfindungsgemäßen Gassackmodules der Bereich der Frontgassäcke, so dass das Gassackmodul ein Frontgassackmodul und hier wiederum bevorzugt ein Kniegassackmodul ist.

In einer bevorzugten Ausführungsform nach Anspruch 7 sind Montageöffnung und Austrittsöffnung voneinander getrennt. Das heißt, dass der Überdeckungsabschnitt wie bei bisherigen Frontgassackmodulen ausgebildet ist und sich die Montageöffnung im Bereich des weiteren Abschnittes befindet. Hierdurch kann der Bereich der Austrittsöffnung praktisch identisch wie bei Gassackmodulen des Standes der Technik ausgebildet sein, was hinsichtlich der Kompalibität zu bestehenden Fahrzeugtypen vorteilhaft sein kann.

Alternativ hierzu ist es jedoch auch möglich, die Austrittsöffnung auch als Montageöffnung zu nutzen, oder die Montageöffnung so anzuordnen, dass sie sich um die Austrittsöffnung herum erstreckt.

Das Gehäuse kann aus einem einzigen Kunststoff gefertigt sein oder, was häufig zu bevorzugen sein wird, aus wenigstens zwei unterschiedlichen Kunststoffen bestehen, wobei das Gehäuse dann vorzugsweise insbesondere in einem sogenannten 2K-Spritzgussverfahren hergestellt sein kann. Hierdurch kann der Tatsache Rechnung getragen werden, dass die Eigenschaften, welche an den Überdeckungsabschnitt und welche an den weiteren Abschnitt gestellt werden, in der Regel unterschiedlich sind.

Die Erfindung wird nun anhand von bevorzugten Ausführungsbeispielen mit Bezug auf die Figuren näher beschrieben. Hierbei zeigen:

### Kurzbeschreibung der Figuren

- Figur 1: sämtliche Bestandteile eines erfindungsgemäßen Gassackmoduls außer den Gassack in einer perspektivischen Darstellung,
- Figur 2: das in Figur 1 gezeigte Gehäuse in einer Draufsicht aus Richtung R,
- Figur 3: das Gassackmodul aus Figur 1 im montiertem Zustand, einschließlich Gassack,
- Figur 4: einen Schnitt entlang der Ebene E-E aus Figur 3, jedoch vor Schließen des Gehäuses,
- Figur 5: das in Figur 4 Gezeigte nach Schließen des Gehäuses, das heißt den Zustand, der in Figur 3 gezeigt ist,
- Figur 6: das in Figur 4 Gezeigte jedoch ohne Gasgenerator und Gassack,
- Figur 7: das in Figur 5 Gezeigte jedoch ohne Gasgenerator und Gassack,
- Figur 8: eine alternative Ausgestaltung des Gehäusebodens,
- Figur 9: eine alternative Ausgestaltung des Gehäuses in einer der Figur 6 entsprechenden Darstellung,
- Figur 10: das in Figur 9 Gezeigte bei geschlossenem Gehäuse,
- Figur 11: eine weitere alternative Ausgestaltung des Gehäuses in einer der Figur 9 entsprechenden Darstellung,
- Figur 12: das in Figur 11 Gezeigte bei geschlossenem Gehäuse,
- Figur 13: eine weitere alternative Ausgestaltung der Erfindung in einer der Figur 5 entsprechenden Darstellung,
- Figur 14: das in Figur 13 Gezeigte in einer der Figur 6 entsprechenden Darstellung,
- Figur 15: ein weiteres Ausführungsbeispiel in einer der Figur 4 entsprechenden Darstellung,
- Figur 16: das in Figur 15 Gezeigte bei geschlossenem Gehäuse,
- Figur 17: die Enden von zwei plattenförmigen Abschnitten mit weiteren alternativen Verbindungsmitteln,
- Figur 18: das in Figur 17 Gezeigte bei geschlossenem Gehäuse,
- Figur 19: eine Alternative zu dem in Figur 17 Gezeigten und
- Figur 20: das in Figur 19 gezeigte im Zustand der Figur 18.

### Beschreibung bevorzugter Ausführungsformen

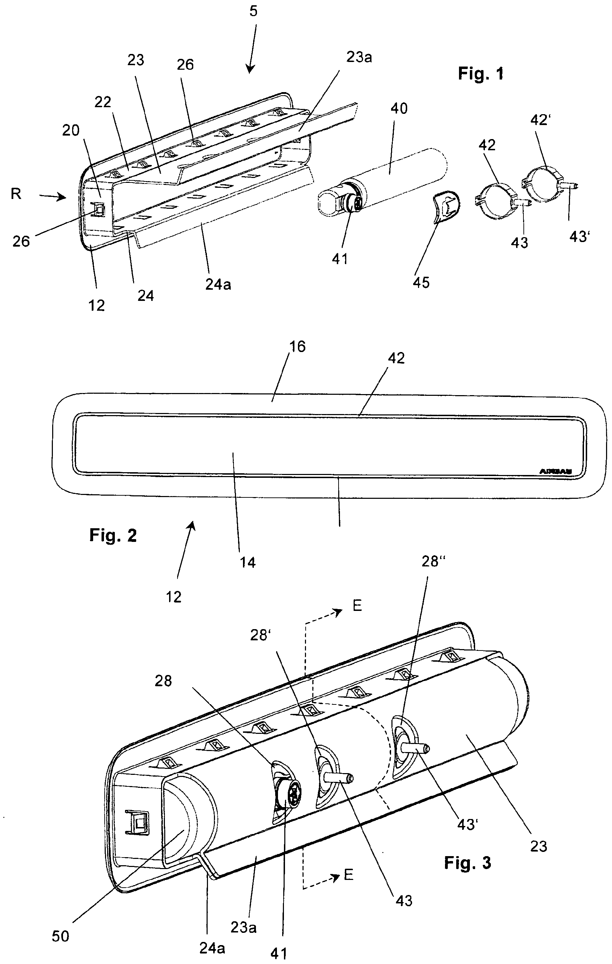

Die Figur 1 zeigt alle Bauteile eines erfindungsgemäßen Gassackmodules in einer perspektivischen Darstellung bis auf den Gassack in einem noch nicht montiertem Zustand. Die Figuren 2 bis 5 zeigen unterschiedliche Ansichten und Montagezustände. Das einteilige, aus Kunststoff bestehende Gehäuse 5 weist zwei Abschnitte auf, nämlich einen Überdeckungsabschnitt 12 und einen weiteren Abschnitt 20. Der Überdeckungsabschnitt 12 wiederum weist, wie man dies insbesondere der Figur 2 entnehmen kann, eine Tür 14 und einen Randabschnitt 16 auf. Die Tür 14 ist vom Randabschnitt 16 mittels einer Sollbruchlinie 14a und einer Scharnierlinie 14b in bekannter Art getrennt, wobei Sollbruchlinie 14a und Scharnierlinie 14b ineinander übergehen. Sollbruchlinie 14a und Scharnierlinie 14b sind in Form von Schwächungsbereichen im Überdeckungsabschnitt 12 ausgebildet. Wenn das Gassackmodul im Kraftfahrzeug montiert ist, bildet der Überdeckungsabschnitt einen Teil der Vorderfläche des Armaturenbrettes. Der weitere Abschnitt 20 weist eine umlaufende Seitenwandung 22 auf, welche im gezeigten Ausführungsbeispiel einen Querschnitt in Form eines länglichen Rechteckes hat. Von den zwei langen Seiten der umlaufenden Seitenwandung 22 erstrecken sich plattenförmige Abschnitte, nämlich der erste plattenförmige Abschnitt 23 und der zweite plattenförmige Abschnitt 24. Das Ende des ersten plattenförmigen Abschnittes 23 bildet der erste Verbindungsabschnitt 23a und das Ende des zweiten plattenförmigen Abschnittes 24 bildet der zweite Verbindungsabschnitt 24a. Im gezeigten Ausführungsbeispiel ist die Wandstärke des weiteren Abschnittes im Wesentlichen konstant und ist so gewählt, dass zumindest der erste plattenförmigen Abschnitt 23, welcher relativ lang ausgebildet ist und im montierten Zustand den größten Teil des Gehäusebodens bildet, gebogen werden kann. Hierauf wird später noch genauer eingegangen.

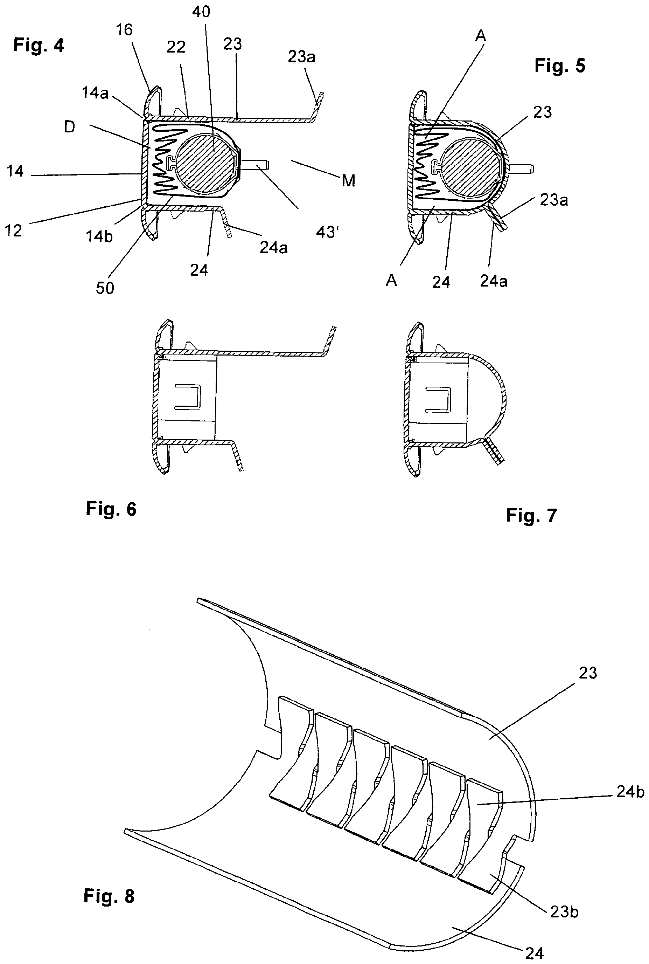

Wie man der Figur 1 weiter entnimmt, ist der Inflator ein zylindrisch ausgebildeter Gasgenerator 40. Um diesen Gasgenerator 40 mit einem Bauteil eines Kraftfahrzeugs verbinden zu können, sind Befestigungsschellen 42, 42' vorgesehen, von denen sich Befestigungsbolzen 43, 43' erstrecken. Im montiertem Zustand umgreifen diese Befestigungsschellen 42, 42' den Gasgenerator 40. Alternativ hierzu ist es auch möglich, dass sich entsprechende Befestigungsbolzen unmittelbar vom Gasgenerator 40 erstrecken. Es ist weiterhin ein Halteteil 45 vorgesehen, welches sich im montiertem Zustand um die Anschlussbuchse 41 des Gasgenerators 40 erstreckt, wobei im montiertem Zustand ein Abschnitt des Gassackes (nicht dargestellt) klemmend zwischen dem Halteteil 41 und dem Gasgenerator 40 gehalten wird. In diesem Zustand (s. beispielsweise Figuren 4 und 5) befindet sich der Gasgenerator 40 in bekannter Art und Weise vollständig innerhalb des Gassackes 50, so dass der Gassack unmittelbar vom Gasgenerator gehalten wird.

Bei der Montage werden zunächst die Befestigungsschellen 42, 42' am Gasgenerator 40 befestigt. Anschließend wird der Gasgenerator 40 in den Gassack 50 eingeführt, wobei sich die Befestigungsbolzen 43, 43' und die Anschlussbuchse des Gasgenerators 40 durch entsprechende Öffnungen im Gassack erstrecken. Der Gassack wird dann mittels des Halteteiles 45 am Gasgenerator 40 zusätzlich gesichert.

Hiernach wird der Gassack zu einem Paket gefaltet und die aus Gasgenerator 40, Befestigungsschellen 42, 42', Befestigungselement und Gassack bestehende Unterbaugruppe durch die Montageöffnung M - Figur 4 - in das noch offene Gehäuse 5 eingesetzt. Die Montageöffnung M befindet sich hier zwischen den beiden plattenförmigen Abschnitten 23, 24 des weiteren Abschnitts 20. Anschließend wird der zweite plattenförmige Abschnitt 24 umgebogen, bis die beiden Verbindungsabschnitte 23a und 24 aufeinander zu liegen kommen (s. insbesondere Figuren 3 und 5) und sich parallel zueinander erstrecken. In diesem Zustand werden die beiden Verbindungsabschnitte 23a und 24a miteinander verbunden, was im gezeigten Ausführungsbeispiel insbesondere durch Schweißen, Verkleben und Vernähen erfolgen kann.

Man entnimmt der Figur 3 weiter, dass sich im ersten plattenförmigen Abschnitt 23 Durchtrittsöffnung 28, 28' und 28" für die Anschlussbuchse sowie die beiden Befestigungsbolzen 43, 43' befinden. Die genannten Bauteile ragen durch diese Durchtrittsöffnungen 28, 28', 28", wobei man in Figur 3 deutlich sehen kann, dass die Durchmesser der entsprechenden Durchtrittsöffnungen 28, 28' und 28" deutlich größer als die Durchmesser der durch sie ragenden Bauteile sind. Das bedeutet, dass der Gasgenerator 40 nicht starr mit dem Gehäuse 5 verbunden ist und ihre Position innerhalb des Gehäuses, das heißt im Aufnahmeraum, nicht genau festgelegt ist. Mit anderen Worten: Die aus Gasgenerator 40 und Gassack 50 bestehende Unterbaugruppe ist schwimmend innerhalb des Gehäuses 5 gehalten und seine Position ist nicht exakt festgelegt. Wird das Gassackmodul in einem Fahrzeug montiert, so dienen die Befestigungsbolzen 43, 43' dazu, den Gasgenerator unmittelbar mit einem Fahrzeugbauteil wie einem Träger zu verbinden. Das bedeutet, dass die Kräfte, die bei Zündung des Gasgenerators und Expansion des Gassack auftreten, insbesondere auch der Fangschlag, unmittelbar ins Fahrzeug abgeleitet werden, so dass das Gehäuse diese Kräfte nicht aushalten muss.

Die positionsgenaue Befestigung des Gehäuses mit einem anderen Fahrzeugbauteil, insbesondere einem Teil des Armaturenbrettes, erfolgt über die Rastabschnitte 26. Diese Befestigung des Gehäuses ist von der Befestigung des Gasgenerators vollständig unabhängig und muss keine großen Kräfte übertragen können. Diese vollständige Trennung der beiden Befestigungen ist wichtig, um trotz geringen Fertigungsaufwandes eine genaue Positionierung des vom Fahrgastraum in der Regel sichtbaren Überdeckungsabschnitts erreichen zu können.

Die Figur 8 zeigt eine alternative Ausgestaltung der beiden plattenförmigen Abschnitte 23 und 24 in einer perspektivischen Darstellung. In dieser alternativen Ausführungsform sind die beiden plattenförmigen Abschnitte 23, 24 vorzugsweise gleich lang, so dass beide einen gleichen Anteil des Gehäusebodens bilden. Vor Abschluss der Montage sind auch hier die beiden plattenförmigen Abschnitte 23, 24 nicht miteinander verbunden, so dass zwischen ihnen eine Montageöffnung M besteht. Die Verbindung zwischen den beiden plattenförmigen Abschnitten 23, 24 erfolgt hier durch ineinander verzahnte Zähne 23b, 24b, wie dies der Figur 8 unmittelbar zu entnehmen ist. Es ist möglich, dass die Verbindung zwischen den plattenförmigen Abschnitten ausschließlich durch entsprechenden Reibschluss zwischen den Zähnen untereinander beziehungswqiese zwischen den Zähnen und dem jeweils gegenüberliegenden plattenförmigen Abschnitt erfolgt, es ist jedoch auch möglich, zusätzliche Verbindungsmaßnahmen, wie insbesondere ein Verkleben oder Verschweißen zu treffen.

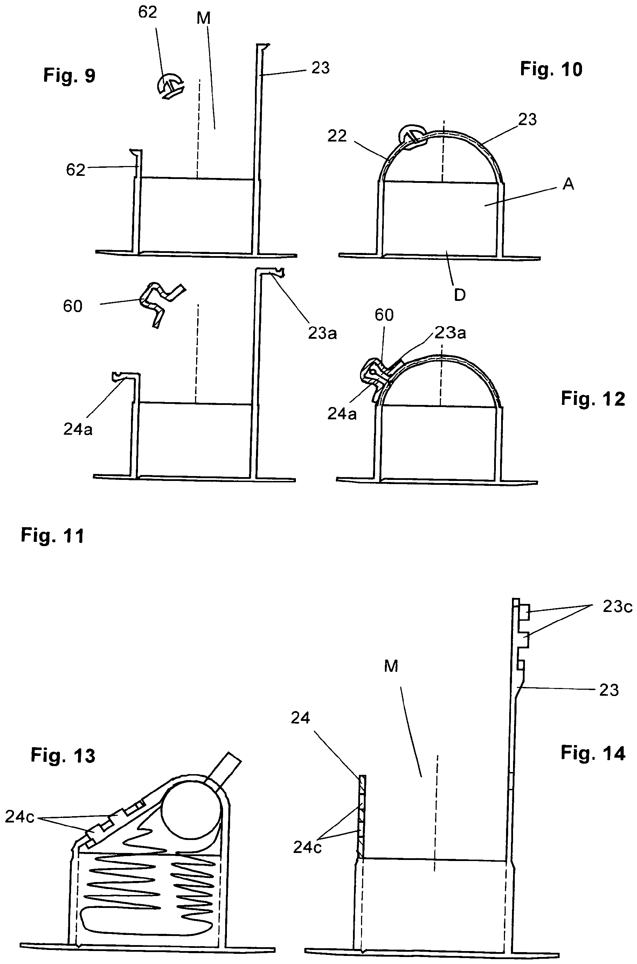

Die Figur 9 und 10 zeigen eine alternative Ausführungsform der Verbindung der beiden plattenförmigen Abschnitte 23 und 24. Hier erfolgt die Verbindung mittels Nieten 62. In diesem Fall benötigt man keine abgewinkelte Verbindungsabschnitte an den Enden der plattenförmigen Abschnitte.

Die Figuren 11 und 12 zeigen eine Ausführungsform, welche der ersten beschriebenen Ausführungsform relativ ähnlich ist. Insbesondere weisen hier die plattenförmigen Abschnitte 23 und 24 ebenfalls abgewinkelte Verbindungsabschnitte 23a und 24a auf. Diese werden hier mittels eines separaten Verbindungselementes 60, welches als Stranggussteil mit Ω-förmigen Querschnitt ausgebildet sein kann, zusammengehalten.

Die Figuren 13 und 14 zeigen eine Ausführungsform, bei der die plattenförmigen Abschnitte 23 und 24 zusammengerastet sind, wozu der erste plattenförmige Abschnitt 23 an seinem dem Überdeckungsabschnitt 12 abgewandten Ende Rasterhöhungen 23c und der zweite plattenförmige Abschnitt 24 entsprechende Rastlöcher 24c aufweist.

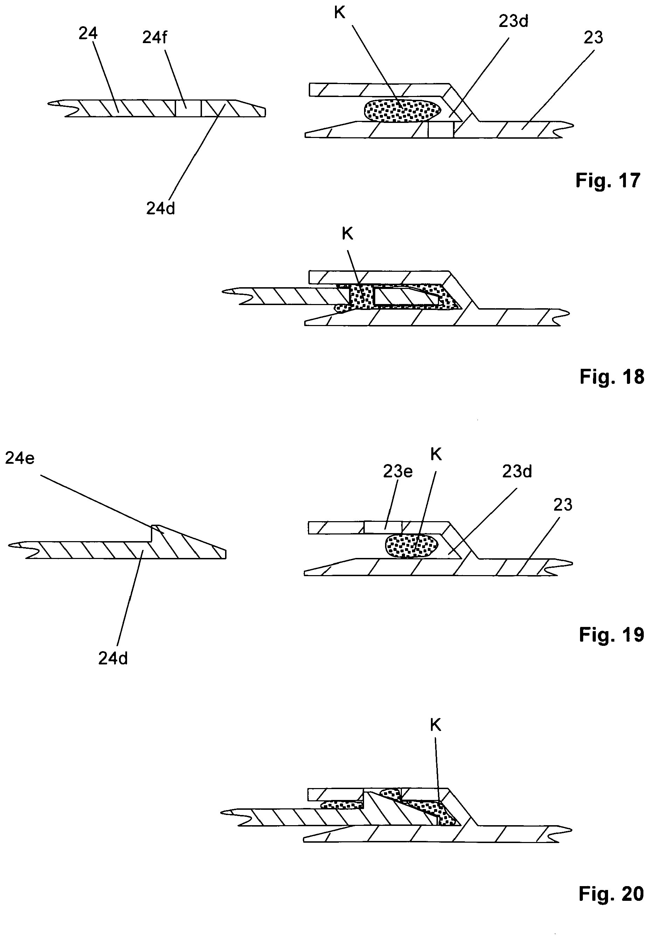

Die Figuren 17 und 18 zeigen eine bevorzugte Möglichkeit, wie die beiden plattenförmigen Abschnitte durch Kleben miteinander verbunden werden können, um die Montageöffnung zu schließen. Hierbei weist der erste plattenförmige Abschnitt 23 an seiner Vorderkante wenigstens eine Tasche 23d (vorzugsweise mehrere zueinander parallele Taschen 23d) auf, in welche vor dem Schließen des Gehäuses ein Klebstoff K injiziert wird. Der zweite plattenförmige Abschnitt 24 weist eine (im Fall mehrerer Taschen die entsprechende Anzahl) Einsteckzunge 24d auf, welche beim Schließen des Gehäuses in die Tasche 23d eingeschoben wird und somit in den Klebstoff eintaucht. In dieser Stellung müssen die beiden plattenförmigen Abschnitte gehalten werden, bis der Klebstoff ausgehärtet ist. Zur Verbesserung des Halts kann die Einsteckzunge 24d eine Durchbrechung 24f aufweisen.

Die Figuren 19 und 20 zeigen eine Weiterbildung des eben Beschriebenen. Hier weist die Einsteckzunge 24d eine Rastnase 24e und die außen liegende Wandung der Tasche eine Rastöffnung 23e auf. Hierdurch kann eine Vorfixierung erreicht werden, welche ausreicht, um die beiden plattenförmigen Abschnitte 23, 24 während des Aushärtens des Klebstoffs K aneinander zu fixieren. Die Rastung ist jedoch kein Ersatz für die Klebung.

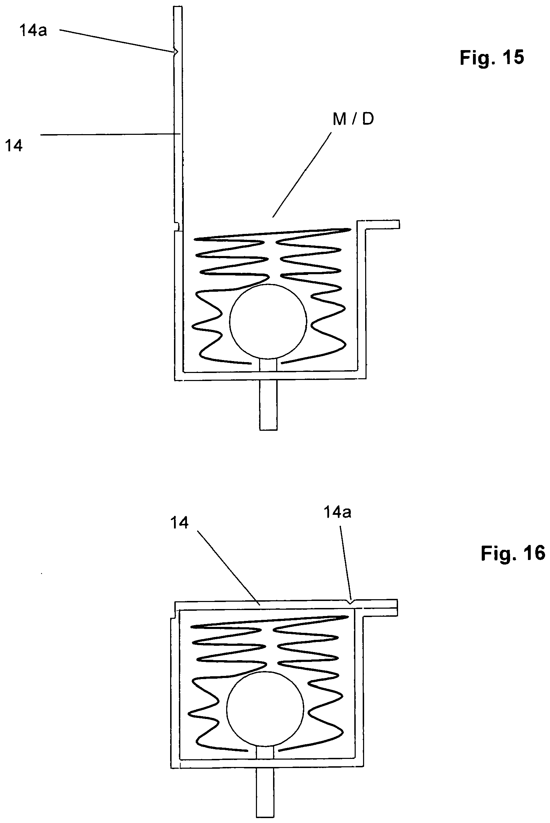

Alle bisher gezeigten Ausführungsbeispiele und Varianten zeigen Gehäuse 5, bei denen sich die Montageöffnung im Wesentlichen gegenüber der Austrittsöffnung D befindet, was hinsichtlich einer eines exakt positionierbaren Überdeckungsabschnittes vorteilhaft sein kann. Zwingend ist dies, wie man anhand der Figuren 15 und 16 entnehmen kann, jedoch nicht. Austrittsöffnung D und Montageöffnung M können zusammenfallen.

Wie bereits erwähnt, kann das Gehäuse 5 ein Zweikomponenten-Kunststoffteil sein, wobei insbesondere der Überdeckungsabschnitt 12 und der weitere Abschnitt 20 aus unterschiedlichen Kunststoffen bestehen, wobei der eine Kunststoff in einer Spritzgussform an den anderen Kunststoff angespritzt ist.

### Bezugszeichenliste

- 5: Gehäuse
- 12: Überdeckungsabschnitt
- 14: Tür
- 14a: Sollbruchlinie
- 14b: Scharnierlinie
- 16: Randabschnitt
- 20: weiterer Abschnitt
- 22: umlaufende Seitenwandung
- 23: erster plattenförmiger Abschnitt
- 23a: erster Verbindungsabschnitt
- 23b: Zahn
- 23c: Rasterhöhung
- 23d: Tasche
- 23e: Rastöffnung
- 24: zweiter plattenförmiger Abschnitt
- 24a: zweiter Verbindungsabschnitt
- 24b: Zahn
- 24c: Rastloch
- 24d: Einsteckzunge
- 24e: Rastnase
- 24f: Durchbrechung
- 26: Rastabschnitt
- 28,28',28": Durchtrittsöffnung
- 40: Gasgenerator
- 45: Halteteil
- 42,42': Befestigungsschelle
- 43,43': Befestigungsbolzen
- 50: Gassackpaket
- 60: Verbindungselement
- D: Austrittsöffnung
- M: Montageöffnung
- K: Klebstoff

## Patentansprüche

1. Gassackmodul für ein Kraftfahrzeug,
mit einem einen Aufnahmeraum (A) umschließenden Gehäuse (5), welches einen Überdeckungsabschnitt (12) und einen weiteren Abschnitt (20) aufweist, einem innerhalb des Aufnahmeraums (A) angeordneten Gassack (50) und einem innerhalb des Aufnahmeraums (A) angeordneten Inflator zur Befüllung des Gassacks (50), wobei sich vom Inflator zwei Befestigungsbolzen (43, 43') erstrecken,
wobei das Gehäuse (5) als einteiliges Kunststoffgehäuse ausgebildet ist und eine Montageöffnung (M) aufweist, durch welche der Gassack (50) und der Inflator (50) bei der Montage in den Aufnahmeraum (A) eingebracht werden und welche nach Abschluss der Montage verschlossen ist,
wobei der weitere Abschnitt (20) einen ersten plattenförmigen Abschnitt (23) aufweist, welcher zwei Durchtrittsöffnungen (28', 28") für die beiden Befestigungsbolzen (43, 43') hat und wobei ein Befestigungsbolzen (43) durch die eine Durchtrittsöffnung (28') ragt und der andere Befestigungsbolzen (43') durch die andere Durchtrittsöffnung (28") ragt,
wobei der Überdeckungsabschnitt (12) im eingebauten Zustand des Gassackmoduls zumindest abschnittsweise unmittelbar an den Fahrgastraum grenzt und eine eine Austrittsöffnung (D) verschließende Tür (14) aufweist,
**dadurch gekennzeichnet,**
**dass** der erste plattenförmige Abschnitt (23) eine Durchtrittsöffnung (28) für eine Anschlussbuchse (41) aufweist, welche durch diese Durchtrittsöffnung (28) ragt, und
**dass** die Durchmesser der Durchtrittsöffnungen (28, 28', 28") deutlich größer als die Durchmesser der durch sie ragenden Bauteile (41, 43, 43') sind, so dass der Inflator nicht starr mit dem Gehäuse (5) verbunden ist und somit seine Position innerhalb des Gehäuses (5) nicht genau festgelegt ist.

2. Gassackmodul nach Anspruch 1, **dadurch gekennzeichnet, dass** es sich um ein Frontgassackmodul handelt.

3. Gassackmodul nach Anspruch 2, **dadurch gekennzeichnet, dass** es ein Kniegassackmodul ist.

4. Gassackmodul nach einem der vorangehenden Ansprüchen, **dadurch gekennzeichnet, dass** der Inflator ein Gasgenerator (40) ist.

5. Gassackmodul nach einem der vorangehenden Ansprüche, **dadurch gekennzeichnet, dass** der Inflator den Gassack (50) hält.

6. Gassackmodul nach einem der vorangehenden Ansprüche, **dadurch gekennzeichnet, dass** am Gehäuse (5) Befestigungsmittel (26) zur Befestigung an einer Fahrzeugstruktur, wie insbesondere dem Armaturenbrett, vorgesehen sind.

7. Gassackmodul nach einem der vorangehenden Ansprüche, **dadurch gekennzeichnet, dass** Montageöffnung (M) und Austrittsöffnung (D) voneinander getrennt sind.

8. Gassackmodul nach Anspruch 7, **dadurch gekennzeichnet, dass** die Montageöffnung (M) im weiteren Abschnitt (20) vorgesehen ist.

9. Gassackmodul nach Anspruch 8, **dadurch gekennzeichnet, dass** der weitere Abschnitt (20) zwei Abschnitte (23, 24) aufweist, welche im montierten Zustand miteinander verbunden sind.

10. Gassackmodul nach Anspruch 9, dass die Verbindung zwischen den beiden Abschnitten (23, 24) durch Formschluss und/oder Stoffschluss, nämlich durch Vernähen und/oder Verkleben und/oder Vernieten und/oder Verschweißen und/oder Verrasten und/oder Verzahnen erfolgt.

11. Gassackmodul nach Anspruch 10, **dadurch gekennzeichnet, dass** einer der beiden Abschnitte (23, 24) wenigstens eine Tasche (23d) und der andere Abschnitt eine Einsteckzunge (24d) aufweist, welche im geschlossenen Zustand des Gassackmoduls mittels Klebstoff in der Tasche (23d) verklebt ist, wobei Tasche (23d) und Einsteckzunge (24d) vorzugsweise zusätzlich miteinander verrastet sind.

12. Gassackmodul nach Anspruch 9, **dadurch gekennzeichnet, dass** die Verbindung zwischen den beiden Abschnitten (23, 24) mittels wenigstens einen separaten Verbindungselements (60, 62) erfolgt.

13. Gassackmodul nach einem der Ansprüche 1 bis 6, **dadurch gekennzeichnet, dass** Montageöffnung (M) und Austrittsöffnung (D) dieselbe Öffnung sind.

14. Gassackmodul nach einem der Ansprüche 1 bis 6, **dadurch gekennzeichnet, dass** die Austrittsöffnung (D) innerhalb der Montageöffnung (M) liegt.

15. Gassackmodul nach einem der vorangehenden Ansprüchen, **dadurch gekennzeichnet, dass** das Gehäuse aus wenigstens zwei unterschiedlichen, stoffschlüssig miteinander verbundenen Kunststoffen besteht und insbesondere in einem Zweikomponenten-Kunststoffteil-Spritzgussverfahren hergestellt ist.

## Claims

1. Gas bag module for a motor vehicle , with a housing (5) enclosing receiving space (A), which has a cover section (12) and a further section (20), a gas bag (50) arranged inside the receiving space (A) and an inflator for filling the gas bag (50) arranged inside the receiving space (A), wherein two fitting bolts (43, 43') extend from the inflator, wherein the housing (5) is designed as a single-part plastic housing and has an assembly opening (M), through which the gas bag (50) and the inflator (50) are inserted into the receiving space (A) during assembly and which is closed following completion of the assembly, wherein the further section (20) has a first plate-shaped section (23), which has two through openings (28', 28") for the two fitting bolts (43, 43'), and wherein one fitting bolt (43) protrudes through the one through opening (28') and the other fitting bolt (43') protrudes through the other through opening (28"), wherein the cover section (12) borders directly onto the passenger space at least in some sections in an installed condition of the gas bag module and has a door (14) closing an exit opening (D), **characterised in that** the first plate-shaped section (23) has a through opening (28) for a connection socket (41), which protrudes through this through opening (28), and **in that** the diameter of the through openings (28, 28', 28") is clearly greater than the diameters of the components (41, 43, 43') protruding through the same, so that the inflator is not rigidly connected with the housing (5) and its position within the housing (5) is therefore not fixed precisely.

2. Gas bag module according to claim 1, **characterised in that** it is a front gas bag module.

3. Gas bag module according to claim 2, **characterised in that** it is a knee gas bag module.

4. Gas bag module according to one of the preceding claims, **characterised in that** the inflator is a gas generator (40).

5. Gas bag module according to one of the preceding claims, **characterised in that** the inflator holds the gas bag (50).

6. Gas bag module according to one of the preceding claims, **characterised in that** fitting means (26) for fitting to a vehicle structure, such as in particular the instrument panel, are envisaged on the housing (5).

7. Gas bag module according to one of the preceding claims, **characterised in that** the assembly opening (M) and exit opening (D) are separated from each other.

8. Gas bag module according to claim 7, **characterised in that** the assembly opening (M) is envisaged in the further section (20).

9. Gas bag module according to claim 8, **characterised in that** the further section (20) has two sections (23, 24), which are connected with each other in an assembled condition.

10. Gas bag module according to claim 9, **characterised in that** the connection between the two sections (23, 24) is realised through positive closure and/or material closure, namely through sewing shut and/or gluing shut and/or riveting shut and/or welding shut and/or arresting and/or gearing.

11. Gas bag module according to claim 10, **characterised in that** one of the two sections (23, 24) has at least one pocket (23d) and the other section has an insertion tab (24d), which are glued into the pocket (23d) by means of adhesive in a closed condition of the gas bag module, and the pocket (23d) and the insertion tab (24d) are preferably additionally arrested with each other.

12. Gas bag module according to claim 9, **characterised in that** the connection between the two sections (23, 24) is realised by means of at least one separate connection element (60, 62).

13. Gas bag module according to one of the claims 1 to 6, **characterised in that** the assembly opening (M) and the exit opening (D) are the same opening.

14. Gas bag module according to one of the claims 1 to 6, **characterised in that** the exit opening (D) lies inside assembly opening (M).

15. Gas bag module according to one of the preceding claims, **characterised in that** the housing consists of at least two different plastics connected with each other by means of material closure, and is in particular produced with a two-part plastic component injection moulding method.

## Revendications

1. Module de coussin à gaz pour un véhicule, avec un boîtier (5) renfermant un espace de logement (A), lequel boîtier présente une portion à recouvrement (12) et une autre portion (20), un coussin à gaz (50) disposé dans l'espace de logement (A) et un gonfleur disposé dans l'espace de logement (A) et destiné au remplissage du coussin à gaz (50), deux boulons de fixation (43, 43') se prolongeant du gonfleur, le boîtier (5) étant formé comme un boîtier en plastique d'une seule pièce et présentant un orifice de montage (M), par lequel le coussin à gaz (50) et le gonfleur (50) sont insérés dans l'espace de logement (A) lors du montage et qui est fermé une fois le montage terminé, l'autre portion (20) présentant une première portion en forme de plaque (23), qui a deux orifices de passage (28', 28") pour les deux boulons de fixation (43, 43'), et un boulon de fixation (43) dépassant par l'un orifice de passage (28') et l'autre boulon de fixation (43') dépassant par l'autre orifice de passage (28"), la portion de recouvrement (12) se situant de manière directement adjacente à l'habitacle au moins par portions à l'état monté du module de coussin à gaz et présentant une porte (14) fermant un orifice de sortie (D), **caractérisé en ce que** la première portion en forme de plaque (23) présente un orifice de passage (28) pour une prise de courant (41), qui dépasse par cet orifice de passage (28), et **en ce que** les diamètres des orifices de passage (28, 28', 28") sont nettement plus grands que les diamètres des composants (41, 43, 43') qui y passent de sorte que le gonfleur n'est pas relié au boîtier (5) de manière rigide et donc que sa position n'est pas déterminée exactement dans le boîtier (5).

2. Module de coussin à gaz selon la revendication 1, **caractérisé en ce qu'**il s'agit d'un module de coussin à gaz frontal.

3. Module de coussin à gaz selon la revendication 2, **caractérisé en ce qu'**il s'agit d'un module de coussin à gaz de genou.

4. Module de coussin à gaz selon l'une des revendications précédentes, **caractérisé en ce que** le gonfleur est un générateur de gaz (40).

5. Module de coussin à gaz selon l'une des revendications précédentes, **caractérisé en ce que** le gonfleur maintient le coussin à gaz (50).

6. Module de coussin à gaz selon l'une des revendications précédentes, **caractérisé en ce que** des moyens de fixation (26) sont prévus sur le boîtier (5) pour la fixation à une structure de véhicule, telle que le tableau de bord notamment.

7. Module de coussin à gaz selon l'une des revendications précédentes, **caractérisé en ce que** l'orifice de montage (M) et l'orifice de sortie (D) sont séparés l'un de l'autre.

8. Module de coussin à gaz selon la revendication 7, **caractérisé en ce que** l'orifice de montage (M) est prévu dans l'autre portion (20).

9. Module de coussin à gaz selon la revendication 8, **caractérisé en ce que** l'autre portion (20) présente deux portions (23, 24) qui sont reliées entre elles à l'état monté.

10. Module de coussin à gaz selon la revendication 9, **caractérisé en ce que** la liaison entre les deux portions (23, 24) se fait par complémentarité de forme et/ou par continuité de matière, à savoir par couture et/ou par collage et/ou par rivetage et/ou par soudage et/ou par encliquetage et/ou par emboîtement.

11. Module de coussin à gaz selon la revendication 10, **caractérisé en ce qu'**une des deux portions (23, 24) présente au moins une poche (23d) et l'autre portion une languette d'insertion (24d), qui est collée au moyen d'une colle dans la poche (23d) à l'état fermé du module de coussin à gaz, la poche (23d) et la languette d'insertion (24d) étant également encliquetées de préférence l'une dans l'autre.

12. Module de coussin à gaz selon la revendication 9, **caractérisé en ce que** la liaison entre les deux portions (23, 24) se fait par au moins un élément de liaison (60, 62) séparé.

13. Module de coussin à gaz selon l'une quelconque des revendications 1 à 6, **caractérisé en ce que** l'orifice de montage (M) et l'orifice de sortie (D) sont le même orifice.

14. Module de coussin à gaz selon l'une quelconque des revendications 1 à 6, **caractérisé en ce que** l'orifice de sortie (D) se trouve dans l'orifice de montage (M).

15. Module de coussin à gaz selon l'une des revendications précédentes, **caractérisé en ce que** le boîtier est composé d'au moins deux différents plastiques reliés entre eux par continuité de matière et fabriqué notamment dans un procédé de moulage par injection de pièces en plastique à deux composants.
